# EUROPEAN PATENT APPLICATION

(11) **EP 1 569 356 A1**
(43) Date of publication of application: **31.08.2005**
(21) Application number: 05251137.5
(22) Date of filing: 25.02.2005
(51) Int. Cl.: H04B 1/707

(54) **Subtractive interference cancellation of pilot and control symbols before the data detection**

(30) Priority: 27.02.2004 JP 2004054291
(71) Applicant: NTT DoCoMo, Inc., Tokyo 100-6150 (JP)
(72) Inventor: Abe, Tetsushi, NTT DoCoMo, Inc., Chiyoda-ku, Tokyo 100-6150 (JP)
(74) Representative: Maury, Richard Philip

(57) **Abstract**

A receiver (100) in a communication system for detecting a data signal included in a received signal transmitted by a transmitter is disclosed. The receiver comprises a channel estimator (101-1) for estimating a channel and outputting a channel estimation value; an interference signal removing unit (101-2,101-3) for generating a received signal replica of a non-data signal included in the received signal using the channel estimation value, and removing the received signal replica of the non-data signal from the received signal; and a data signal detector (102) for detecting the data signal using an output from the interference signal removing unit. A subtractive interference cancellation of the pilot and control symbols is performed before the data detection. Replicas for each path and each antenna are created and subtracted.

## Description

### BACKGROUND OF THE INVENTION

The present invention generally relates to a receiver, a radio communication system and a receiving method for improving communication quality in CDMA signal transmissions.

In mobile communication systems, CDMA (Code Division Multiple Access) systems are employed at present. In the CDMA system, a data signal and a non-data signal (such as a pilot signal and other control signals) are encoded with spreading codes on the same time and frequency domains to transmit.

Since the CDMA spreading codes are orthogonal to each other, data signals can be detected at a receiver without interference if there is no multipath.

However, in multipath channels, due to lack of perfect orthogonality between the spreading codes, there exists interference between the spreading codes of the data signals and the non-data signals, resulting in degraded reception quality.

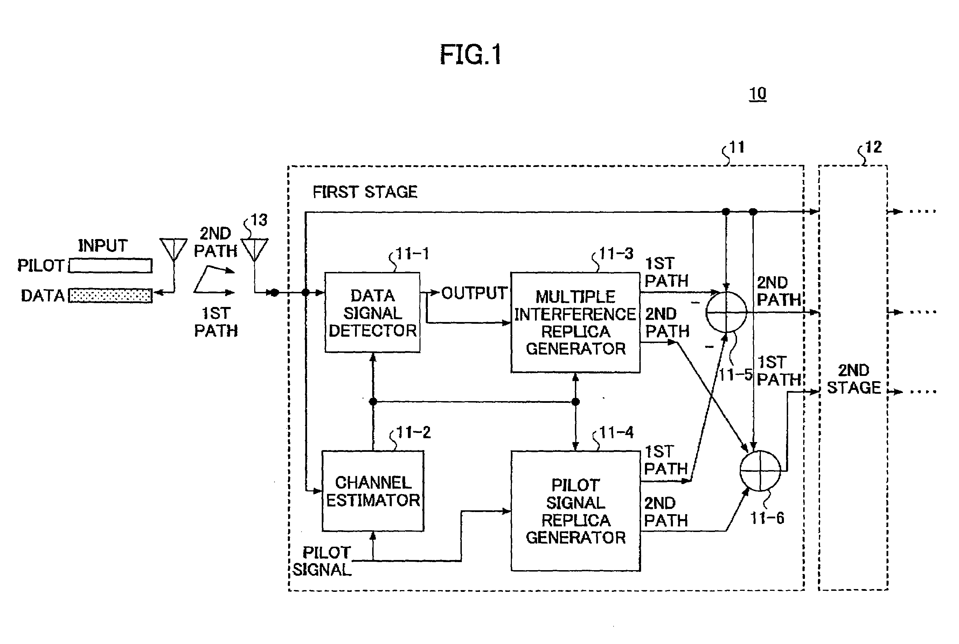

In order to reduce the degradation of the reception quality, a method is proposed for using a received signal replica of a non-data signal. This method is explained below with reference to Fig. 1.

A transmitter transmits a data signal and a pilot signal by the CDMA transmission method. These signals are received at an antenna 13 of a receiver 10 through multipath channels. Fig. 1 shows a two multipath case. In a first stage 11 in the receiver 10, a channel estimator 11-2 performs channel estimation using a pilot signal and outputs a channel estimation value. A data signal detector 11-1 uses the channel estimation value and detects (despreading, RAKE combination, decoding, etc.) the data signal. The data signal detected by the data signal detector 11-1 is output to a multi-interference replica generator 11-3.

The multi-interference replica generator 11-3 uses the detected data signal and the channel estimation value to generate a received signal replica of each path's data signal. A pilot signal replica generator 11-4 uses a pilot signal and the channel estimation value to generate a received signal replica of each path's pilot signal.

Next, the received signal replicas of the data signal and pilot signal for the first path are phase-inverted and added to the total received signal in an adder 11-5 to output a second path received signal output. The received signal replicas for the second path are phase-inverted and added to the total received signal in an adder 11-6 to output a first path received signal output.

The output first path and second path received signals are input to a second stage 12, where signal detection is performed. These processing procedures are done over plural stages to improve the quality of demodulated signals.
[Non-patent Document #1] "Characteristic evaluation of Multipath interference canceller in W-CDMA downlink super high speed packet transmission", RCS2000-167, November 17, 2000.
[Non-patent Document #2] P.W. Wolniansky, G.J. Foschini, G.D. Golden, P.W. Wolniansky, "V-BLAST: An architecture for Realizing Very High Data Rates Over the Rich-Scattering Wireless Channels", ISSSE-98, Pisa Italy.

However, the above explained related art examples have the following problem.

In the first stage in the receiver 10, the subtraction of the received signal replica of the pilot signal is done (at the adders 11-5, 11-6) after the data signal detection at the data signal detector 11-1. Accordingly, it is possible to improve data signal detection characteristics in and after the second stage, but it is impossible to improve data signal detection characteristics in the first stage due to pilot signal interference.

### SUMMARY OF THE INVENTION

A general object of the present invention is to provide a receiver, communication system and receiving method in which data signal detecting characteristics can be improved.

The above object of the present invention is achieved by a receiver (100) in a communication system for detecting a data signal included in a received signal transmitted by a transmitter, comprising: a channel estimator (101-1) for estimating a channel and outputting a channel estimation value; an interference signal removing unit (101-2, 101-3) for generating a received signal replica of a non-data signal included in the received signal using the channel estimation value, and removing the received signal replica of the non-data signal from the received signal; and a data signal detector (102) for detecting the data signal using an output from the interference signal removing unit.

In the above mentioned receiver, the interference signal removing unit may generate a received signal replica of at least one of a pilot signal and a control signal, and may remove the received signal replica of said at least one of the pilot signal and the control signal.

The receiver may further comprise a plurality of antennas, and the channel estimator may estimate a channel for a received signal received at each of the antennas; and the interference signal removing unit may generate a received signal replica of a non-data signal included in the received signal received at each of the antennas and remove the received signal replica of the non-data signal from the received signal received at each of the antennas.

The object of the present invention is achieved also by a communication system having a transmitter and a receiver (100) for detecting a data signal included in a received signal transmitted by the transmitter, the receiver comprising: a channel estimator (101-1) for estimating a channel and outputting a channel estimation value; an interference signal removing unit (101-2, 101-3) for generating a received signal replica of a non-data signal included in the received signal using the channel estimation value, and removing the received signal replica of the non-data signal from the received signal; and a data signal detector (102) for detecting the data signal using an output from the interference signal removing unit.

According to embodiments of the present invention, a receiver, a communication system and a receiving method are realized in which data signal detection characteristics are improved.

### BRIEF DESCRIPTION OF THE DRAWINGS

Fig. 1 is a block diagram of a prior receiver;
FIG. 2 is a block diagram of a receiver according to a first embodiment of the present invention;
Fig. 3 is a flowchart illustrating a receiving procedure in the receiver according to the first embodiment of the present invention;
FIG. 4 is a block diagram of a receiver according to a second embodiment of the present invention;
Fig. 5 is a flowchart illustrating a receiving procedure in the receiver according to the second embodiment of the present invention;
FIG. 6 is a block diagram of a receiver according to a third embodiment of the present invention;
Fig. 7 is a flowchart illustrating a receiving procedure in the receiver according to the third embodiment of the present invention; and
Fig. 8 is a graph showing advantage obtained by an embodiment of the present invention.

### DESCRIPTION OF THE PREFERRED EMBODIMENTS

The following is a description of embodiments of the present invention, with reference to the accompanying drawings.

Throughout all the figures, members and parts having the same functions are assigned the same or similar reference numerals and redundant explanations are omitted.

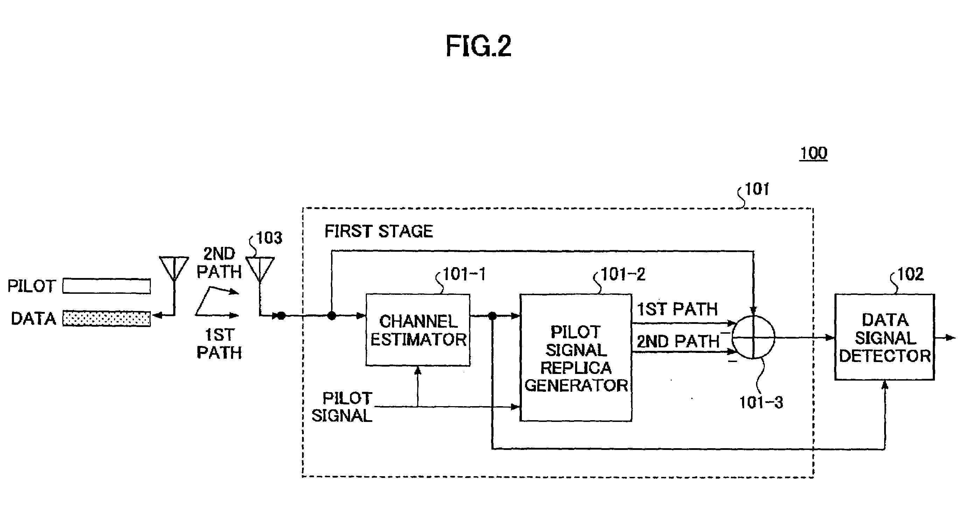

A communication system according to embodiments of the present invention comprises a transmitter and a receiver 100 as shown in Figs. 2, 4 or 6.

The transmitter transmits data signals and non-data signals to the receiver 100. Based on the received signals transmitted by the transmitter, the receiver 100 detects data signals.

### [First Embodiment]

A structure of the receiver 100 according to a first embodiment of the present invention is described below with reference to Fig. 2.

In the receiver 100 of the communication system according to this embodiment, received signal replicas of non-data signals (such as pilot signals) included in the received signals are removed from the total received signal before the first data signal detection.

The receiver 100 of the communication system according to this embodiment comprises an antenna 103, a channel estimator 101-1 connected to the antenna and receiving a pilot signal, a pilot signal replica generator 101-2 connected to the channel estimator 101-1 and receiving the pilot signal, an adder 101-3 connected to the pilot signal replica generator 101-2 and the antenna 103, and a data signal detector 102 connected to the adder 101-3 and the channel estimator 101-1. The channel estimator 101-1, the pilot signal replica generator 101-2 and the adder 101-3 form a first stage 101.

In the receiver 100, the channel estimator 101-1 performs channel estimation based on the signals (including a pilot signal) transmitted from the transmitter and a pilot signal separately supplied. The channel estimation value that has been estimated by the channel estimator 101-1 is input to the pilot signal replica generator 101-2 and the data signal detector 102.

The pilot signal replica generator 101-2 generates a received signal replica of the pilot signal for each path using the input channel estimation value and the pilot signal. The generated received signal replicas are input to the adder 101-3.

In the adder 101-3, the received signal replicas of the pilot signal for the 1st and 2nd paths are removed (subtracted) from the total received signal, in order to remove interference by the pilot signal. In another words, the received signal replicas of the pilot signal are phase-inverted and added to the total received signal.
The received signal from which the received signal replicas of the pilot signal have been removed is input to the data signal detector 102.

The data signal detector 102 uses the input received signal (from which the received signal replicas of the pilot signal have been removed) and the channel estimation value to detect data signals. The data signal detection can be performed in a single stage or multiple stages.

As mentioned above, in the receiver 100 of the communication system according to this embodiment of the present invention, the received signal replicas of the pilot signal are subtracted before (not after) the first data signal detection. Therefore the interference by the pilot signal can be avoided and the first data signal detection characteristics can be improved.

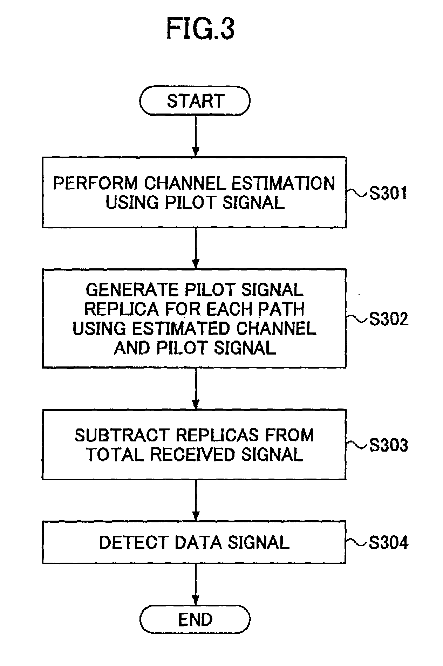

Next, a receiving procedure in the receiver 100 of the communication system according to this embodiment is explained below with reference to Fig. 3.

The signals transmitted by the transmitter are received at the antenna 103 and input to the channel estimator 101-1. The channel estimator 101-1 performs channel estimation based on the received signals and a pilot signal (step S301).

The channel estimation value that has been estimated by the channel estimator 101-1 is input to the pilot signal replica generator 101-2 and the data signal detector 102. The pilot signal replica generator 101-2 generates a received signal replica of the pilot signal for each path using the input channel estimation value and the pilot signal (step S302).

Each of the generated received signal replicas is input to the adder 101-3 per each path. In the adder 101-3, the received signal replicas of the pilot signal for the 1st and 2nd paths are removed (subtracted) from the total received signal, in order to remove interference by the pilot signal (step S303).

The subtracted resultant signal is input to the data signal detector 102. The data signal detector 102 uses the input received signal (from which the received signal replicas of the pilot signal have been removed) and the channel estimation value to detect data signals (step S304).

### [Second Embodiment]

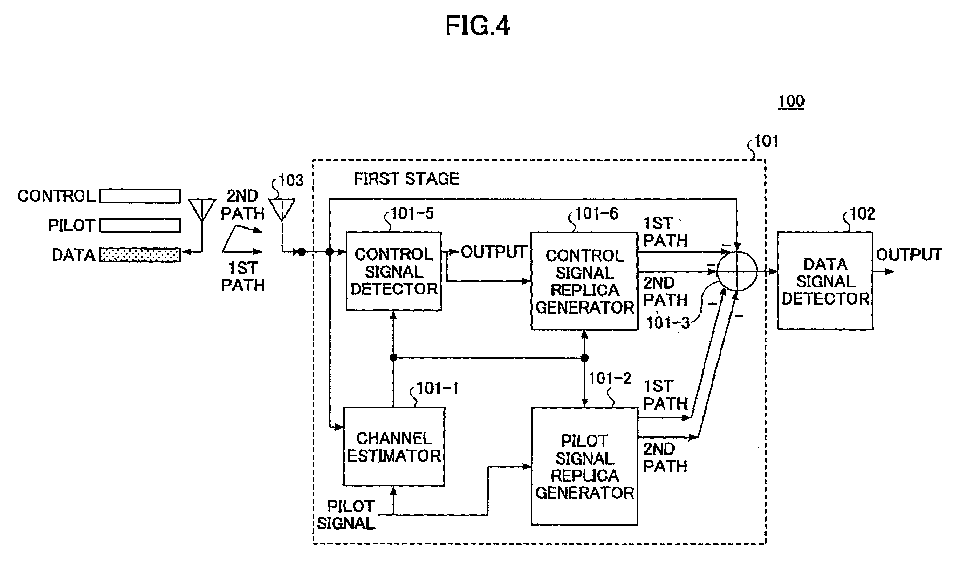

A receiver of a communication system according to a second embodiment of the present invention is described below with reference to Fig. 4.

The receiver 100 of the communication system according to this embodiment comprises an antenna 103, a channel estimator 101-1 connected to the antenna and receiving a pilot signal, a pilot signal replica generator 101-2 connected to the channel estimator 101-1 and receiving the pilot signal, an adder 101-3 connected to the pilot signal replica generator 101-2 and the antenna 103, and a data signal detector 102 connected to the adder 101-3.

The receiver 100 in this embodiment further comprises a control signal detector 101-5 connected to the antenna 103 and the channel estimator 101-1, and a control signal replica generator 101-6 connected to the control signal detector 101-5, the channel estimator 101-1 and the pilot signal replica generator 101-2.

The channel estimator 101-1, the pilot signal replica generator 101-2, the adder 101-3, the control signal detector 101-5 and the control signal replica generator 101-6 form a first stage 101.

Non-data signals in the actual communication system include a pilot signal already known to the receiver and other control signals. In the receiver 100, the channel estimator 101-1 performs channel estimation based on the signals (including a pilot signal) transmitted from the transmitter and a pilot signal separately supplied. The channel estimation value that has been estimated by the channel estimator 101-1 is input to the pilot signal replica generator 101-2, the control signal detector 101-5 and the control signal replica generator 101-6.

The control signal detector 101-5 detects a control signal (despreading, RAKE combination, decoding, etc.) by using the received signal and the channel estimation value, and outputs the detected control signal to the control signal replica generator 101-6.

The control signal replica generator 101-6 generates a received signal replica of the control signal for each path using the received control signal and the channel estimation value. Each of the generated received signal replicas of the control signal is input to the adder 101-3 per each path.

The pilot signal replica generator 101-2 generates a received signal replica of the pilot signal for each path using the input channel estimation value and the pilot signal. Each of the generated received signal replicas of the pilot signal is input to the adder 101-3 per each path.

In the adder 101-3, the received signal replicas of the control signal and the pilot signal for the 1st and 2nd paths are removed (subtracted) from the total received signal, in order to remove interference by the non-data signal. The received signal from which the received signal replicas of the control signal and the pilot signal have been removed is input to the data signal detector 102.

The data signal detector 102 uses the input received signal (from which the received signal replicas of the control signal and the pilot signal have been removed) to detect data signals. The data signal detection can be performed in a single stage or multiple stages.

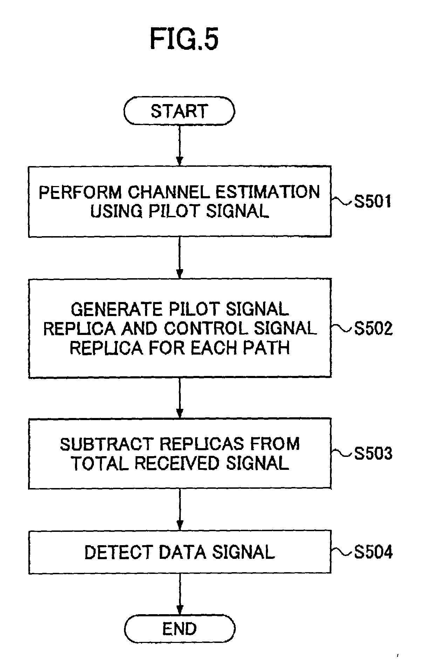

Next, a receiving procedure in the receiver 100 of the communication system according to this embodiment is explained below with reference to Fig. 5.

The signals transmitted by the transmitter are received at the antenna 103 and input to the channel estimator 101-1. The channel estimator 101-1 performs channel estimation based on the received signals and a pilot signal (step S501). The channel estimation value that has been estimated by the channel estimator 101-1 is input to the pilot signal replica generator 101-2, the control signal detector 101-5 and the control signal replica generator 101-6.

The pilot signal replica generator 101-2 generates a received signal replica of the pilot signal for each path using the input channel estimation value and the pilot signal, and the control signal replica generator 101-6 generates a received signal replica of the control signal for each path using the input channel estimation value and the control signal (step S502).

Each of the generated received signal replicas of the pilot signal and the control signal is input to the adder 101-3 per each path. In the adder 101-3, the received signal replicas of the pilot signal and the control signal for the 1st and 2nd paths are removed (subtracted) from the total received signal, in order to remove interference by the pilot signal and the control signal (step S503).

The subtracted resultant signal is input to the data signal detector 102. The data signal detector 102 uses the input received signal (from which the received signal replicas of the pilot signal and the control signal have been removed) to detect data signals (step S504).

### [Third Embodiment]

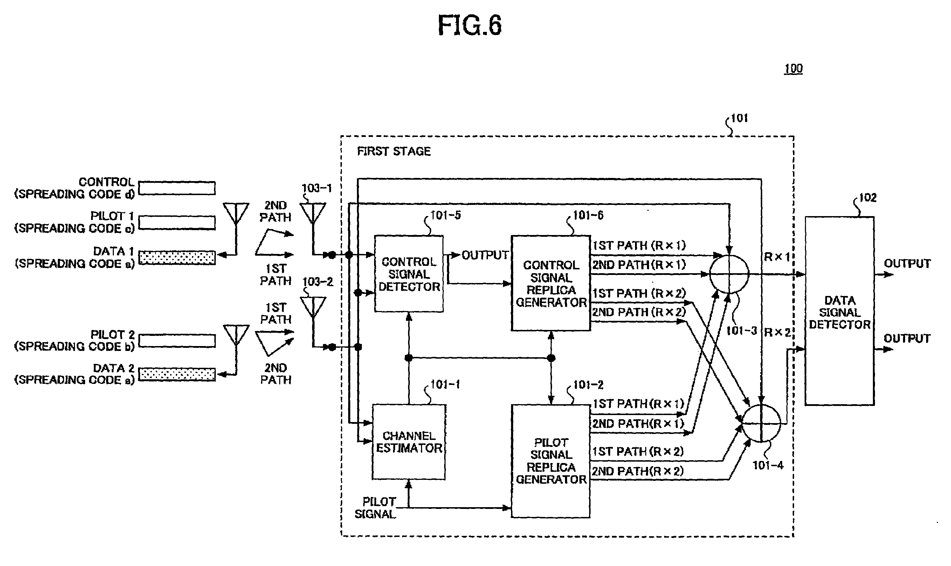

A transmitter and a receiver of a communication system according to a third embodiment of the present invention are described below with reference to Fig. 6.

The transmitter and the receiver 100 of the communication system according to this embodiment have a plurality of antennas. An explanation is given below with respect to the transmitter and receiver having two antennas.

The transmitter transmits a control signal, a first pilot signal and a first data signal via a first transmission antenna, and transmits a second pilot signal and a second data signal via a second antenna.

The same spreading code a is used for the first and second data signals. A spreading code b is used for the second pilot signal, and a spreading code c is used for the first pilot signal. A spreading code d is used for the control signal. These signals are encoded and multiplied on the same time and frequency domain.

The receiver of the communication system according to this embodiment of the present invention further comprises a channel estimator 101-1 connected to the antennas 103-1, 103-2 and receiving a pilot signal, a pilot signal replica generator 101-2 connected to the channel estimator 101-1 and receiving the pilot signal, two adders 101-3, 101-4 connected to the pilot signal replica generator 101-2 and control signal replica generator and the antennas 101-1, 101-2 respectively, and a data signal detector 102 connected to the adders 101-3, 101-4.

The receiver 100 in this embodiment further comprises a control signal detector 101-5 connected to the antennas 103-1, 103-2 and the channel estimator 101-1, and a control signal replica generator 101-6 connected to the control signal detector 101-5, the channel estimator 101-1 and the pilot signal replica generator 101-2.

The channel estimator 101-1, the pilot signal replica generator 101-2, the adders 101-3, 101-4, the control signal detector 101-5 and the control signal replica generator 101-6 form a first stage 101.

The receiver 100 receives the signal transmitted by the transmitter at the antennas 103-1, 103-2. In the receiver 100, the channel estimator 101-1 performs channel estimation for each antenna, based on the signals (including a pilot signal) received at the antennas 103-1, 103-2 and a pilot signal separately supplied. The channel estimation value that has been estimated by the channel estimator 101-1 is input to the pilot signal replica generator 101-2, the control signal detector 101-5 and the control signal replica generator 101-6.

The control signal detector 101-3 detects a control signal using the received signal and the channel estimation value, and outputs the detected control signal to the control signal replica generator 101-6.

The control signal replica generator 101-6 generates a received signal replica of the control signal for each path per antenna, using the detected control signal and the channel estimation value.
Each of the generated received signal replicas of the control signal for the first antenna 103-1 is input to the first adder 101-3 per each path. Each of the generated received signal replicas of the control signal for the second antenna 103-2 is input to the second adder 101-4 per each path.

The pilot signal replica generator 101-2 generates a received signal replica of the pilot signal for each path per antenna, using the input channel estimation value and the pilot signal. Each of the generated received signal replicas of the pilot signal for the first antenna 103-1 is input to the first adder 101-3 per each path. Each of the generated received signal replicas of the pilot signal for the second antenna 103-2 is input to the second adder 101-4 per each path.

In the first adder 101-3, the received signal replicas of the control signal and the pilot signal for the 1st and 2nd paths and the first antenna 103-1 are removed (subtracted) from the total signal received at the first antenna 103-1, in order to remove interference by the non-data signals. The received signal of the first antenna 103-1 from which the received signal replicas of the control signal and the pilot signal of the first antenna have been removed includes the only data signals (Data1 + Data2) and is input to the data signal detector 102.

In the second adder 101-4, the received signal replicas of the control signal and the pilot signal for the 1st and 2nd paths and the second antenna 103-2 are removed (subtracted) from the total signal received at the second antenna 103-2, in order to remove interference by the non-data signals. The received signal of the second antenna 103-2 from which the received signal replicas of the control signal and the pilot signal of the second antenna have been removed includes the only data signal (Data1 + Data2) and is input to the data signal detector 102.

The data signal detector 102 uses the input received signals (from which the received signal replicas of the control signal and the pilot signal of the first and second antennas have been removed) to detect the first and second data signals. The data signal detection performed in the data signal detector 102 can use a variety of detecting techniques such as V-BLAST (Vertical-Bell Laboratories Layered Space Time, see non-patent document #2). The data signal detection can be performed in a single stage or multiple stages.

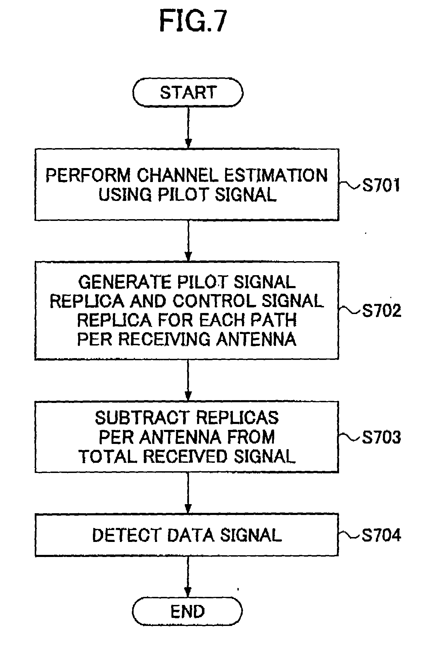

Next, a receiving procedure in the receiver 100 of the communication system according to this embodiment is explained below with reference to Fig. 7.

The signals transmitted by the transmitter are received at the antennas 103-1, 103-2 and input to the channel estimator 101-1. The channel estimator 101-1 performs channel estimation based on the received signals and a pilot signal (step S701).
The channel estimation value that has been estimated by the channel estimator 101-1 is input to the pilot signal replica generator 101-2, the control signal detector 101-5 and the control signal replica generator 101-6.

The pilot signal replica generator 101-2 generates a received signal replica of the pilot signal for each path per receiving antenna, using the input channel estimation value and the pilot signal, and the control signal replica generator 101-6 generates a received signal replica of the control signal for each path per receiving antenna, using the input channel estimation value and the control signal (step S702).

Each of the generated received signal replicas of the pilot signal for the first receiving antenna 103-1 is input to the first adder 101-3 per each path. Each of the generated received signal replicas of the pilot signal for the second receiving antenna 103-2 is input to the second adder 101-4 per each path.

Each of the generated received signal replicas of the control signal for the first receiving antenna 103-1 is input to the first adder 101-3 per each path. Each of the generated received signal replicas of the control signal for the second receiving antenna 103-2 is input to the second adder 101-4 per each path.

In the first adder 101-3, the received signal replicas of the control signal and the pilot signal for the 1st and 2nd paths and the first antenna 103-1 are removed (subtracted) from the total signal received at the first antenna 103-1, in order to remove interference by the non-data signals. In the second adder 101-4, the received signal replicas of the control signal and the pilot signal for the 1st and 2nd paths and for the second antenna 103-2 are removed (subtracted) from the total signal received at the second antenna 103-2, in order to remove interference by the non-data signals (step S703).

The received signal of the first antenna 103-1 from which the received signal replicas of the control signal and the pilot signal of the first antenna have been removed includes the first data only and is input to the data signal detector 102. The received signal of the second antenna 103-2 from which the received signal replicas of the control signal and the pilot signal of the second antenna have been removed includes the second data only and is input to the data signal detector 102.

The data signal detector 102 uses the input received signals (from which the received signal replicas of the control signal and the pilot signal of the first and second antennas have been removed) to detect the first and second data signals (step S704).

In signal transmission utilizing plural antennas, received signals include more interference signals compared with single antenna transmission. According to this embodiment of the present invention, the interference by non-data signals can be avoided and reception quality can be improved especially in multiple antenna transmission.

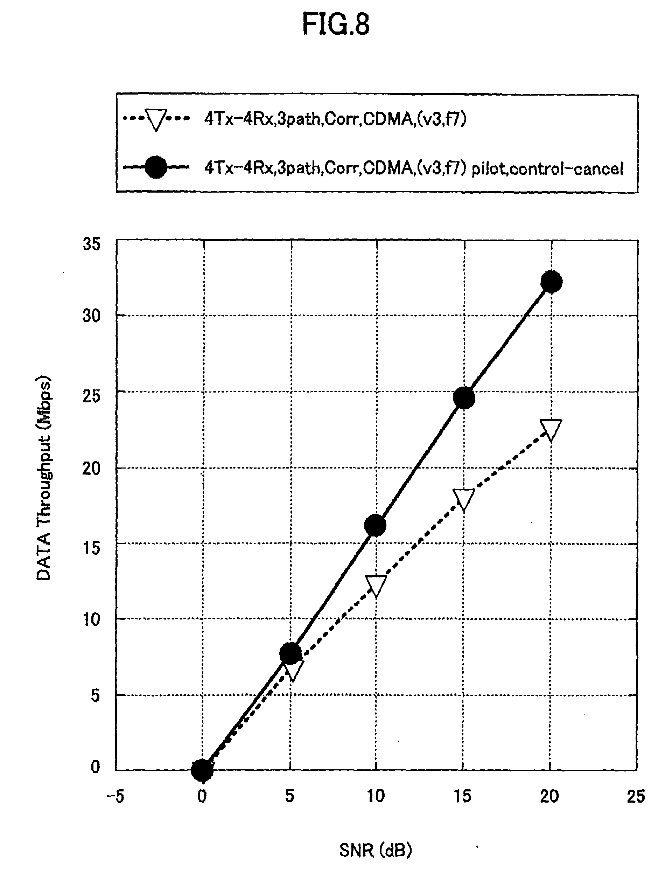

Advantage obtained by the embodiments of the present invention is explained below with reference to Fig. 8.

Fig. 8 shows Data Throughput characteristics (Mbps) versus SNR (signal-to-noise) (dB) in a communication system comprising a transmitter and receiver each having four antennas.

In order to get this graph, data signal detection in the receiver is done with the BLAST technique, the channel estimation is assumed perfect in the channel estimator, and an adaptive modulation/demodulation technique is used where the transmission rate is independently chosen for each transmitting antennas.

As a result, solid dots in the graph represent characteristics where the received signal replicas of the pilot signal and the control signal are removed (cancelled). Hollow triangles in the graph represent characteristics where the received signal replicas of the pilot signal and the control signal are not removed (cancelled).

According to Fig. 8, it is understood that Data Throughput can be improved when the received signal replicas of the pilot signal and the control signal are removed (cancelled) before the data signal detection.

In the above embodiments, the receiver has one or two antennas, but receivers having more than two antennas can improve data signal reception quality, and such receivers are within the scope of the present invention.

In the above embodiments, the receiver receives two path signals, but receivers receiving one path signal or more than two path signals can improve data signal reception quality, and such receivers are within the scope of the present invention.

Receivers, communication systems and receiving methods according to the present invention can be utilized in CDMA communication systems.

## Claims

1. A receiver (100) in a communication system for detecting a data signal included in a received signal transmitted by a transmitter, **characterized by**:
a channel estimator (101-1) for estimating a channel and outputting a channel estimation value;
an interference signal removing unit (101-2, 101-3) for generating a received signal replica of a non-data signal included in the received signal using the channel estimation value, and removing the received signal replica of the non-data signal from the received signal; and
a data signal detector (102) for detecting the data signal using an output from the interference signal removing unit.

2. The receiver as claimed in claim 1, **characterized in that** the interference signal removing unit generates the received signal replica of at least one of a pilot signal and a control signal, and removes the received signal replica of said at least one of the pilot signal and the control signal.

3. The receiver as claimed in claim 1, further **characterized by**:
a plurality of antennas; wherein
the channel estimator estimates the channel for the received signal received at each of the antennas; and
the interference signal removing unit generates the received signal replica of the non-data signal included in the received signal received at each of the antennas and removes the received signal replica of the non-data signal from the received signal received at each of the antennas.

4. A communication system having a transmitter and a receiver (100) for detecting a data signal included in a received signal transmitted by the transmitter, said receiver **characterized by**:
a channel estimator (101-1) for estimating a channel and outputting a channel estimation value;
an interference signal removing unit (101-2, 101-3) for generating a received signal replica of a non-data signal included in the received signal using the channel estimation value, and removing the received signal replica of the non-data signal from the received signal; and
a data signal detector (102) for detecting the data signal using an output from the interference signal removing unit.

5. A receiving method in a receiver (100) in a communication system for detecting a data signal included in a received signal transmitted by a transmitter, **characterized by**:
a step for estimating a channel and outputting a channel estimation value;
a step for generating a received signal replica of a non-data signal included in the received signal using the channel estimation value, and removing the received signal replica of the non-data signal from the received signal; and
a step for detecting the data signal using an output from the interference signal removing unit.
